# EUROPÄISCHE PATENTANMELDUNG

(11) **EP 2 022 331 A1**
(43) Veröffentlichungstag der Anmeldung: **11.02.2009**
(21) Anmeldenummer: 07015174.1
(22) Anmeldetag: 02.08.2007
(51) Int. Cl.: A01N 59/00, A01N 37/40, A01N 37/10, A01N 37/02, A01N 33/12, A01N 31/02, A01N 25/30, A01P 1/00

(54) **Desinfektionsmittel zur Herabsetzung der Keimzahl und Verringerung von Biofilmen**

(71) Anmelder: WESSO AG, 91217 Hersbruck (DE)
(72) Erfinder: Wessollek, Heimo Dr. h.c., DE-91224 Pommelsbrunn (DE)
(74) Vertreter: LOUIS, PÖHLAU, LOHRENTZ

(57) **Zusammenfassung**

Die Erfindung betrifft ein Desinfektionsmittel zur Herabsetzung der Keimzahl und zur Verringerung von Biofilmen, ein Verfahren zur Herabsetzung der Keimzahl in Luft, ein Verfahren zur Herabsetzung der Keimzahl und zur Verringerung von Biofilmen in Flüssigkeiten führenden Systemen, sowie die Verwendung des Mittels.

## Beschreibung

Die Erfindung betrifft ein Desinfektionsmittel zur Herabsetzung der Keimzahl und zur Verringerung von Biofilmen, ein Verfahren zur Herabsetzung der Keimzahl in Luft, ein Verfahren zur Herabsetzung der Keimzahl und zur Verringerung von Biofilmen in Flüssigkeiten führenden Systemen, sowie die Verwendung des Mittels.

Im Stand der Technik sind verschiedene Mittel zur Herabsetzung der Keimzahl und zur Verringerung von Biofilmen bekannt. Als aktive Wirkstoffe werden häufig Peroxide oder andere Stoffe mit einer hohen Oxidationswirkung wie Chlor eingesetzt. Hierbei müssen sehr hohe Konzentrationen im Wasser oder in der Luft eingesetzt werden, um die Keimzahl und/oder die Biofilme zu verringern. Aufgrund der geringen Stabilität derartiger Lösungen wird allerdings keine dauerhafte Desinfektion des Wassers erreicht. Darüber hinaus sind die eingesetzten Stoffe toxisch und ätzend und daher in vielen Anwendungsbereichen unbrauchbar.

Aus der EP 0 711 253 A1 ist die Verwendung eines Mittels zur Herabsetzung der Keimzahlen zur Stabilisierung von Trink- und Brauchwasser bekannt, welches einen oder mehrere Lebensmittelkonservierungsstoffe, eine nichttoxische Säure sowie eine Wasserstoffperoxidlösung umfasst. Dieses Mittel ist jedoch nicht optimal, um mit hoher Effektivität und dauerhaft die Keimzahlen und/oder die Biofilmbildung zu verringern, gering zu halten und/oder zu beseitigen. Für viele, insbesondere im gewerblich-technischen Bereich genutzte Anwendungen, ist die Wirksamkeit und Nachhaltigkeit der Wirkung nicht ausreichend.

Aus der DE 299 03 415 U1 ist die Verwendung eines Desinfektionsmittels, umfassend Peroxidverbindungen, Lebensmittelkonservierungsstoffe und Tenside bekannt, wobei die Tenside in einer Konzentration von 0,1 bis 5 Gew.-%, bezogen auf das Gesamtgewicht des Mittels, eingesetzt werden. Durch die hohe Konzentration des Tensides von bis zu 5 Gew.-% ist eine dauerhafte Anwendung des Mittels, insbesondere zur Desinfektion von Trinkwasser, nicht möglich.

Es ist Aufgabe der vorliegenden Erfindung, ein Desinfektionsmittel zur Herabsetzung der Keimzahl und zur Verringerung von Biofilmen bereitzustellen, das nicht toxisch ist, nicht ätzend ist, eine starke und langfristige Wirkung aufweist und insbesondere auch zur kontinuierlichen Anwendung geeignet ist.

Die Aufgabe wird durch ein Desinfektionsmittel gelöst, umfassend:
a) mindestens eine Peroxidverbindung,
b) mindestens eine oberflächenaktive Substanz, ausgewählt aus der Gruppe, umfassend Zuckertenside, quaternäre Ammoniumverbindungen, Aminosäurederivate mit Tensid-Wirkung, Alkalisalze von Fettsäuren, Glycolether, Derivate davon und/oder Mischungen davon, und
c) mindestens einen Lebensmittelkonservierungsstoff und/oder ein Derivat davon, vorzugsweise ausgewählt aus der Gruppe, umfassend Sorbinsäure, Essigsäure, Propionsäure, Ascorbinsäure, Ameisensäure, Milchsäure, Brenztraubensäure, Weinsäure, Äpfelsäure, Benzoesäure, Benzylbenzoesäure, Salicylsäure, Zitronensäure, Methoxybenzoesäure, Hydroxybenzoesäure, Methyl-Hydroxybenzoesäure, Propyl-Hydroxybenzoesäure, Salze davon, Derivate davon, und/oder Mischungen davon,
wobei die Konzentration der oberflächenaktiven Substanz vorzugsweise weniger als 0,5 Gew.-%, weiter bevorzugt weniger als 0,05 Gew.-%, bezogen auf das Gesamtgewicht des Desinfektionsmittels, beträgt.

Die spezielle Kombination aus einer Peroxidverbindung, einer speziellen oberflächenaktiven Substanz und einem speziellen Lebensmittelkonservierungsstoff ermöglicht eine effektive Keimzahlverringerung und/oder Beseitigung der Keime in wasserführenden und/oder luftführenden Systemen. Ferner eignet sich das erfindungsgemäße Desinfektionsmittel zur Verringerung und/oder Beseitigung von Biofilmen in wasserführenden Systemen.

Unter dem Begriff Biofilme sind vorzugsweise mikrobielle Ablagerungen zu verstehen, die von Bakterien gebildete polysaccharid- und proteinreiche extrazelluläre Substanz sowie anorganische Salze enthalten, die in ihrer Gesamtheit einen Schutz für die angesiedelten Bakterien darstellen. Üblicherweise liegen die mikrobiellen Ablagerungen filmartig vor.

Völlig unerwartet bewirkt das erfindungsgemäße Desinfektionsmittel eine langanhaltende Resistenz gegen eine mikrobielle Neubesiedlung und/oder verhindert die Ausbreitung und/oder Vermehrung von Mikroorganismen.

Das erfindungsgemäße Desinfektionsmittel kann vorzugsweise ohne Geschmacks- und/oder Geruchsbeeinträchtigung eingesetzt werden. Ferner weist das erfindungsgemäße Desinfektionsmittel eine vergleichsweise niedrige Toxizität auf Haut und Schleimhäute bei der Handhabung und Anwendung auf.

Durch die Zugabe einer oberflächenaktiven Substanz, die auch als Tensid bezeichnet werden kann, wird eine erhöhte Löslichkeit des Desinfektionsmittels erreicht. Darüber hinaus bewirkt die oberflächenaktive Substanz eine Auflockerung der Lipopolysaccharid-Strukturen der Zellwand. Überraschenderweise tritt diese Wirkung bereits bei sehr geringen Konzentrationen der oberflächenaktiven Substanz von vorzugsweise weniger als 0,5-Gew.- %, bezogen auf das Gesamtgewicht des Desinfektionsmittels, ein. Hierdurch können kleinere Wirkstoffmoleküle, wie Lebensmittelkonservierungsstoffe und/oder Peroxide, leichter in das Zellinnere gelangen und entfalten dort ihre Wirkung, beispielsweise durch Wechselwirkung mit Enzymen. Aufgrund der eintretenden synergistischen Wirkung kann die Konzentration der Lebensmittelkonservierungsstoffe und/oder der Peroxide abgesenkt werden.

Das erfindungsgemäße Desinfektionsmittel umfasst ausschließlich biologisch abbaubare Substanzen. Es ist nach der Gefahrstoffverordnung, die an europäischen Richtlinien ausgerichtet ist, als ungefährlich einzustufen. Es ist daher umweltfreundlich und kann gefahrlos auch im privaten Bereich angewendet werden. Das erfindungsgemäße Desinfektionsmittel umfasst keine hohen Konzentrationen an aggressiven Stoffen, geht mit Materialien, aus denen üblicherweise wasserführende und/oder luftführende Systeme bestehen, keine chemische Reaktion ein. Insbesondere fördert das erfindungsgemäße Desinfektionmittel nicht die Korrosion von Metallen. Darüber hinaus ist das erfindungsgemäße Desinfektionsmittel nicht wassergefährdend.

Das erfindungsgemäße Desinfektionsmittel ist vorzugsweise auch geeignet, um Biofilme mit Kalk-, Eisen- und/oder Manganablagerungen in wasserführenden Systemen zu entfernen.

Somit wirkt das erfindungsgemäße Desinfektionsmittel sehr mild gegenüber der Umwelt, beseitigt und/oder verringert aber dennoch dauerhaft Keime und/oder Biofilme.

Bei einer Ausführungsform umfasst das erfindungsgemäße Desinfektionsmittel eine Peroxidverbindung, ausgewählt aus der Gruppe, umfassend Alkaliperoxide, Erdalkaliperoxide, Wasserstoffperoxid, Peroxysäuren, Perborate, Perphosphate, Percarbonate, Derivate davon und/oder Mischungen davon.

Folgende Zuckertenside, quaternäre Ammoniumverbindungen, Aminosäurederivate mit Tensid-Wirkung, Alkalisalze von Fettsäuren, Glycolether können vorzugsweise bei dem erfindungsgemäßen Desinfektionsmittel als oberflächenaktive Substanzen eingesetzt werden:
Als Zuckertenside sind beispielsweise Alkyl(C₈-C₁₂)(poly)glycoside und/oder Alkyl(C₈-C₁₂)maltoside geeignet. Beispielsweise können Octylpolyglycoside, Decylpolyglycoside, Undecylpolyglycoside, Butylpolyglycoside eingesetzt werden.

Als quaternäre Ammoniumverbindungen können beispielweise Didecyldimethylammoniumchlorid, Cetyltrimethylammoniumchlorid, Benzalkoniumchlorid, insbesondere N-Alkyl(C₁₂-C₁₈)-N-benzyl-N,N-dimethyl-ammoniumchlorid, eingesetzt werden.

Als Alkalisalze von Fettsäuren sind z. B. geeignet Natriumpalmitat, Natriumoleat, Natriummyristat, Natriumstearat, Kaliumpalmitat, Natriumoleat, und/oder Kaliummyristat.

Als Aminosäurederivate mit Tensidwirkung können alkylierte Aminosäuren, wie Alkylglutamate eingesetzt werden. Beispielsweise ist ein geeignetes Alkylglutamat Dinatriumcocoylglutamat.

Natriumlauriminodiproprionat, Amphoacetate, wie Natriumlauroamphoacetat, Sarkosinate, wie Natriumlauroylsarkosinat, und/oder Betaine, wie Laurylamidopropylbetain, können ebenfalls als oberflächenaktive Substanzen verwendet werden.

Als Glycolether können (Poly)oxyethylenverbindungen, wie 2-(2-Butoxyethoxy)ethanol, Polysorbat 20, Polysorbat 40, Polysorbat 60, Polysorbat 61, Polysorbat 65, Polysorbat 80, hydrogeniertes Rhizinusöl (6 bis 60 Ethylenoxid), und/oder Polyoxyethylen, vorzugsweise mit einem Molekulargewicht von 150 bis 6000, eingesetzt werden.

Bei einer Ausführungsform umfasst das erfindungsgemäßen Desinfektionsmittel ferner einen Stoff, der den Energiestoffwechsel, insbesondere von Mikroorganismen, hemmt oder verändert. Beispielsweise können Zuckeraustauschstoffe, z.B. Zuckeralkohole, eingesetzt werden.

Vorzugsweise umfasst das erfindungsgemäße Desinfektionsmittel mindestens einen Zuckeraustauschstoff. Unter Zuckeraustauschstoffen sind vorzugsweise süßschmeckende Kohlenhydrate zu verstehen, die vom Menschen Insulinunabhängig metabolisiert werden. Die Zuckeraustauschstoffe können ferner aus der Gruppe ausgewählt werden, umfassend Mannit, Sorbit, Maltit, Isomalt, Lactit, Leucrose, Fructooligosaccharide, Glucane, Polyglucose PL-3, L-Ketose, Nystose, Fructyl-Nystose und/oder Xylit.

Erstaunlicherweise wurde festgestellt, dass die zusätzliche Zugabe von Stoffen, die den Energiestoffwechsel hemmen oder verändern, deutlich die keimreduzierende Wirkung des erfindungsgemäßen Desinfektionsmittels verbessert. Durch Zugabe beispielsweise von Zuckeraustauschstoffen wurde eine zusätzliche Hemmung des Bakterienwachstums festgestellt.

Bei einer Ausführungsform des erfindungsgemäßen Verfahrens werden als Lebensmittelkonservierungstoff Derivate der Hydroxybenzoesäure, wie beispielsweise Hydroxybenzoesäureester eingesetzt. Als geeignet haben sich 4-Hydroxybenzoesäuremethylester, 4-Hydroxybenzoesäureethylester, 4-Hydroxybenzoesäurepropylester und/oder 4-Hydroxybenzoesäurebutylester erwiesen.

Das erfindungsgemäße Desinfektionsmittel kann ferner Entschäumungsmittel enthalten. Als Entschäumungsmittel sind insbesondere Polysiloxane, wie beispielsweise Polydimethylsiloxan, geeignet. Hierdurch wird eine bessere technischen Handhabung des erfindungsgemäßen Desinfektionsmittels ermöglicht. Die Entschäumungsmittel können zusammen mit der oberflächenaktiven Substanz zugegeben werden.

Bei einer bevorzugten Ausführungsform umfasst das Desinfektionsmittel
a) Alkaliperoxide, Erdalkaliperoxide und/oder Wasserstoffperoxid,
b) Alkylpolyglycoside und/oder quaternäre Ammoniumverbindungen, und
c) Sorbinsäure, Milchsäure, Essigsäure, Brenztraubensäure, Benzoesäure und/oder deren Salze.

Ferner kann das Desinfektionsmittel zusätzlich Zuckeraustauschstoffe umfassen.

Abhängig von der Menge der Mikroorganismen, der Art der Mikroorganismen und dem Einsatzgebiet kann die Konzentration des Desinfektionsmittels bei der Anwendung, insbesondere die Konzentrationen der einzelnen Komponenten des Desinfektionsmittels, bedarfsgerecht angepasst werden.

Das erfindungsgemäße Desinfektionsmittel liegt vorzugsweise in einer konzentrierten Stammlösung vor, beispielsweise in einem Handelsprodukt, und wird üblicherweise vor oder bei der Anwendung verdünnt bis zu der gewünschten Endkonzentration in der zu behandelnden Flüssigkeit und/oder der Flüssigkeit des zu behandelnden Flüssigkeiten führenden Systems. Das erfindungsgemäße Desinfektionsmittel kann jedoch auch unverdünnt eingesetzt werden.

Bei einer Ausführungsform umfasst das erfindungsgemäße Desinfektionsmittel die Peroxidverbindung in einer Konzentration von 0,001 bis 10 Gew.-%, vorzugsweise 0,1 bis 5 Gew.-%, bezogen auf das Gesamtgewicht des Desinfektionsmittels.

Bei einer Ausführungsform umfasst das erfindungsgemäße Desinfektionsmittel die oberflächenaktive Substanz in einem Konzentrationsbereich von 0,001 bis weniger als 0,5 Gew.-%, vorzugsweise in einem Bereich von 0,01 bis weniger als 0,5 Gew.-%, am meisten bevorzugt in einem Bereich von 0,01 bis 0,05 Gew.-%, bezogen auf das Gesamtgewicht des Desinfektionsmittels.

Bei einer Ausführungsform umfasst das Desinfektionsmittel als oberflächenaktive Substanz quaternäre Ammoniumverbindungen, vorzugsweise in einer Konzentration von 0,05 bis 0,5 Gew.-%, am meisten bevorzugt von 0,1 bis 0,5 Gew.-%, bezogen auf das Gesamtgewicht des Desinfektionsmittels.

Bei einer Ausführungsform umfasst das Desinfektionsmittel als oberflächenaktive Substanz Zuckertenside vorzugsweise in einer Konzentration von 0,001 bis 0,2 Gew.-%, am meisten bevorzugt von 0,01 bis 0,1 Gew.-% , bezogen auf das Gesamtgewicht des Desinfektionsmittels.

Bei einer Ausführungsform umfasst das erfindungsgemäße Desinfektionsmittel den Lebensmittelkonservierungsstoff in einer Konzentration von 0,01 bis 5 Gew.-%, vorzugsweise 0,3 bis 3 Gew.-%, bezogen auf das Gesamtgewicht des Desinfektionsmittels.

Bei einer Ausführungsform umfasst das Desinfektionsmittel mindestens einen Stoff, der den Energiestoffwechsel, insbesondere von Mikroorganismen, hemmt oder verändert, in einer Konzentration von 0,001 bis 5 Gew.-%, vorzugsweise 0,01 bis 4 Gew.-%, am meisten bevorzugt 0,1 bis 3 Gew.-%, bezogen auf das Gesamtgewicht des Desinfektionsmittels. Der Stoff, der den Energiestoffwechsel, insbesondere von Mikroorganismen, hemmt oder verändert, kann beispielsweise ein Zuckeraustauschstoff sein.

Bei einer bevorzugten Ausführungsform des erfindungsgemäßen Desinfektionsmittels umfasst dieses
0,01 bis 0,5 Gew.-% Sorbinsäure, vorzugsweise 0,02 bis 0,2 Gew.-% Sorbinsäure, und/oder
0,2 bis 3 Gew.-% Natriumbenzoat, und/oder
0,01 bis 0,3 Gew.-% eines Alkylpolyglycosids (C8-C12),
bezogen auf das Gesamtgewicht des Desinfektionsmittels.

Bei einer bevorzugten Ausführungsform des erfindungsgemäßen Desinfektionsmittels umfasst dieses
0,01 bis 3,0 Gew.-% Milchsäure, vorzugsweise 0,1 bis 2 Gew.-% Milchsäure, und/oder
0,01 bis 0,3 Gew.-% eines Alkylpolyglycosids (C8-C12)
und/oder
0,05 bis 5,0 Gew.-%, vorzugsweise 0,1 bis 3,0 Gew.-%, Xylit,
bezogen auf das Gesamtgewicht des Desinfektionsmittels.

Bei einer Ausführungsform umfasst das erfindungsgemäße Desinfektionsmittel vorzugsweise kein Chlor und/oder keine chlorhaltigen Verbindungen.

Bei einer Ausführungsform umfasst das erfindungsgemäße Desinfektionsmittel vorzugsweise weniger als 3 Gew.-% Enzyme, am meisten bevorzugt weniger als 1 Gew.-% Enzyme bezogen auf das Gesamtgewicht des Desinfektionsmittels. Am meisten bevorzugt umfasst das erfindungsgemäße Desinfektionsmittel keine Enzyme.

Gemäß der vorliegenden Erfindung wird nach der Zugabe des Desinfektionsmittels zu der zu desinfizierenden Flüssigkeit und/oder zu der Flüssigkeit eines Flüssigkeiten führenden Systems die erhaltene Mischung als Desinfektionslösung bezeichnet.

Bei einer Ausführungsform umfasst die erfindungsgemäße Desinfektionslösung, welche das erfindungsgemäße Desinfektionsmittel und ggf. eine zu desinfizierende Flüssigkeit und/oder die Flüssigkeit eines Flüssigkeiten führenden Systems umfasst, folgendes:
mindestens eine Peroxidverbindung in einer Endkonzentration von 0,000001- 5 Gew.-%, vorzugsweise 0,0001 bis 2 Gew.-%, und/oder
mindestens eine oberflächenaktive Substanz in einer Endkonzentration von 0,00001 bis 0,3 Gew.-%, vorzugsweise 0,0001 bis 0,1 Gew.-%, und/oder
mindestens einem Lebensmittelkonservierungsstoff in einer Endkonzentration von 0,00001 bis 3 Gew.-%, vorzugsweise 0,0003 bis 1 Gew.-%, und/oder
mindestens einen Stoff, der den Energiestoffwechsel hemmt oder verändert, in einer Endkonzentration von 0,00001 bis 4 Gew.-%, vorzugsweise 0,0001 bis 2 Gew.-%,
bezogen auf das Gesamtgewicht der zu desinfizierenden Flüssigkeit oder der Flüssigkeit eines Flüssigkeiten führenden Systems.

Bei einer anderen Ausführungsform umfasst die erfindungsgemäße Desinfektionslösung, welche das erfindungsgemäße Desinfektionsmittel und ggf. eine zu desinfizierende Flüssigkeit und/oder die Flüssigkeit eines Flüssigkeiten führenden Systems umfasst, folgendes:
mindestens eine Peroxidverbindung in einer Endkonzentration von 0,0000000025 - 1 Gew.-%, vorzugsweise 0,00000025 bis 0,5 Gew.- %, und/oder
mindestens eine oberflächenaktive Substanz in einer Endkonzentration von 0,0000000025 bis 0,05 Gew.-%, vorzugsweise 0,00000025 bis 0,03 Gew.-%, und/oder
mindestens einem Lebensmittelkonservierungsstoff in einer Endkonzentration von 0,000000025 bis 0,5 Gew.-%, vorzugsweise 0,00000075 bis 0,3 Gew.-%, und/oder
mindestens einen Stoff der den Energiestoffwechsel hemmt oder verändert, in einer Endkonzentration von 0,0000000025 bis 0,5 Gew.-%,
bezogen auf das Gesamtgewicht der zu desinfizierenden Flüssigkeit oder der Flüssigkeit eines Flüssigkeiten führenden Systems.

Die erfindungsgemäße Desinfektionsmittellösung kann auch zu 100% aus dem erfindungsgemäßen Desinfektionsmittel bestehen. Somit kann das erfindungsgemäße Desinfektionsmittel auch unverdünnt eingesetzt werden.

Unter "Endkonzentration" im Sinne der vorliegenden Erfindung sind vorzugsweise die Konzentrationen der Komponenten der Desinfektionslösung zu verstehen, die bei der Verdünnung des Desinfektionsmittels zur Keimzahlverringerung, Keimbeseitigung, Biofilmverringerung und/oder Biofilmbeseitigung erhalten werden. Das verdünnte gebrauchsfertige Desinfektionsmittel wird, wie vorstehend ausgeführt, auch als Desinfektionslösung bezeichnet.

Unter dem Begriff "zu desinfizierende Flüssigkeit" im Sinne der vorliegenden Erfindung sind vorzugsweise Flüssigkeiten zu verstehen, die selbst desinfiziert werden, beispielsweise Schwimmbadwasser und/oder industrielles Prozess-oder Brauchwasser, wie beispielsweise aus Kühlanlagen. Unter dem Begriff "Flüssigkeiten, zur Desinfektion von Flüssigkeiten führenden Systemen" sind vorzugsweise Flüssigkeiten zu verstehen, die üblicherweise in Flüssigkeiten führenden Systemen im Rahmen der üblichen Anwendung eingesetzt werden und/oder die einem Flüssigkeiten führenden System eigens zur Desinfektion im Rahmen eines Desinfektionsverfahrens zugeführt werden, wie beispielsweise bei Klimaanlagen.

Bei einer Ausführungsform umfasst das Desinfektionsmittel ferner Silber-Salze wie Silbernitrat und/oder kolloidales Silber. Die Konzentration der Silber-Salze und/oder des kolloidalen Silber beträgt vorzugsweise von 0,0001 bis 0,1 Gew.-%., weiter bevorzugt von 0,0005 bis 0,05 Gew.-%, bezogen auf das Gesamtgewicht des Desinfektionsmittels. Die Endkonzentration des kolloidalen Silbers in der erfindungsgemäßen Desinfektionslösung, die aus dem erfindungsgemäßen Desinfektionsmittel durch Verdünnung herstellbar ist, beträgt vorzugsweise 0,0000000005 bis 0,0005 Gew.-%, weiter bevorzugt 0,0000001 bis 0,0001 Gew.-%, bezogen auf das Gesamtgewicht einer zu desinfizierenden Flüssigkeit oder einer Flüssigkeit eines Flüssigkeiten führenden Systems.

Das erfindungsgemäße Desinfektionsmittel kann zur Keimzahlverringerung in Flüssigkeiten, Emulsionen, Suspensionen und/oder der Luft eingesetzt werden. Vorzugsweise wird das erfindungsgemäße Desinfektionsmittel zur Keimzahlverringerung in Wasser, insbesondere Trinkwasser, Kühlwasser, Brauchwasser, und/oder der Luft verwendet.

Das erfindungsgemäße Desinfektionsmittel kann ferner in Flüssigkeiten führenden, insbesondere Wasser führenden Systemen, zur Beseitigung und/oder Verringerung von Biofilmen eingesetzt werden. Neben der Keimzahlverringerung, Keimbeseitigung, dem Verringern, Verhindern und/oder Entfernen von Biofilmen in Flüssigkeiten führenden Systemen kann das erfindungsgemäße Desinfektionsmittel auch eingesetzt werden, um Geruchsbelästigungen durch Bakterienbesiedlungen zu vermeiden.

Ferner kann das erfindungsgemäße Desinfektionsmittel eingesetzt werden, um die Neubesiedelung und/oder Ausbreitung von Mikroorganismen über längere Zeiträume von bis zu einem Monat, vorzugsweise bis zu einem Jahr, am meisten bevorzugt bis zu 3 Jahren, zu verhindern. Je nach den Voraussetzungen und dem Ausmaß der Keimbesiedelung kann die Anwendung des erfindungsgemäßen Desinfektionsmittels mit einer Langzeitwirkung auch nach dem Absetzen des Desinfektionsmittels einhergehen.

Insbesondere weist das erfindungsgemäße Desinfektionsmittel eine hervorragende Wirkung gegen Mikroorganismen wie Bakterien, Viren, Pilze und/oder Einzeller auf. Das erfindungsgemäße Desinfektionmittel wirkt insbesondere gegen Coli-Bakterien, Salmonellen, Legionellen, Pneumokokken, Staphylokokken, Tuberkulose-Bakterien, Aspergillus-Pilze, und/oder Candida-Pilze.

Bei einer Ausführungsform wird das erfindungsgemäße Desinfektionsmittel zur Beseitigung und/oder Verringerung von Biofilmen und/oder der Keimzahl in der Lebensmittelherstellung, der Lebensmittellagerung, dem Lebensmittelverkauf, bei der Herstellung von Arzneimitteln, bei biotechnologischen Verfahren, in privaten Haushalten, gewerblichen Räumen, Sporteinrichtungen, Schwimmbädern, in medizinischen Bereichen, Trinkwasseranlagen, Prozesswasser von Industrieanlagen, Wasch- und Spülanlagen in Großwäschereien, Autowaschanlagen, Druckereien, Brunnen und Teichen, Wasser in Biotopen, in der Fischzucht, in Aqua-Kulturen, Wasser von sanitären Anlagen, Löschwasser, zur Wasserdesinfektion im Katastrophenschutz, der Desinfektion von Wasser in Klimaanlagen, in Warm-Kaltwassersystemen, Kühlsystemen, Beregnungsanlagen, Wärmeaustauschern, Kompressoren, Kühltürmen, Luftwäschern, bei der Glasherstellung, Porzellanherstellung, in Feuchtwasser in Druckereien, Lösungen und wässrigen Lösungen bei der Papierherstellung, als Zusatz zu Trennmitteln in Gussformen, in Molkereien und/oder in der Abfallwirtschaft eingesetzt.

Die Aufgabe wird ferner durch ein Verfahren zur Desinfektion von Flüssigkeiten und/oder Flüssigkeiten führenden Systemen gelöst, wobei das Desinfektionsmittel mit den Flüssigkeiten zu der vorstehend definierten Desinfektionslösung verdünnt wird.

Bei einer Ausführungsform des erfindungsgemäßen Verfahrens zur Desinfektion von Flüssigkeiten und/oder Flüssigkeiten führenden Systemen wird den Flüssigkeiten und/oder den Flüssigkeiten des Flüssigkeiten führenden Systems das erfindungsgemäße Desinfektionsmittel mit folgenden Endkonzentrationen der Komponenten des Desinfektionsmittels zugesetzt:
mindestens eine Peroxidverbindung in einer Endkonzentration von 0,000001- 5 Gew.-%, vorzugsweise 0,0001 bis 2 Gew.-%, und/oder
mindestens eine oberflächenaktive Substanz in einer Endkonzentration von 0,00001 bis 0,3 Gew.-%, vorzugsweise 0,0001 bis 0,1 Gew.-%, und/oder
mindestens einem Lebensmittelkonservierungsstoff in einer Endkonzentration von 0,0001 bis 3 Gew.-%, vorzugsweise 0,0003 bis 1 Gew.-%, und/oder
mindestens einen Stoff, der den Energiestoffwechsel hemmt oder verändert, in einer Endkonzentration von 0,00001 bis 4 Gew.-%, vorzugsweise 0,0001 bis 2 Gew.-%,
bezogen auf das Gesamtgewicht der zu desinfizierenden Flüssigkeit und/oder der Flüssigkeit eines Flüssigkeiten führenden Systems.

Bei einer anderen Ausführungsform des erfindungsgemäßen Verfahrens zur Desinfektion von Flüssigkeiten und/oder Flüssigkeiten führenden Systemen wird den Flüssigkeiten und/oder den Flüssigkeiten des Flüssigkeiten führenden Systems das erfindungsgemäße Desinfektionsmittel mit folgenden Konzentrationen der Komponenten des Desinfektionsmittels zugesetzt:
mindestens eine Peroxidverbindung in einer Endkonzentration von 0,0000000025 - 1 Gew.-%, vorzugsweise 0,00000025 bis 0,5 Gew.- %, und/oder
mindestens eine oberflächenaktive Substanz in einer Endkonzentration von 0,0000000025 bis 0,05 Gew.-%, vorzugsweise 0,00000025 bis 0,03 Gew.-%, und/oder
mindestens einem Lebensmittelkonservierungsstoff in einer Endkonzentration von 0,000000025 bis 0,5 Gew.-%, vorzugsweise 0,00000075 bis 0,3 Gew.-%, und/oder
mindestens einen Stoff, der den Energiestoffwechsel hemmt oder verändert, in einer Endkonzentration von 0,0000000025 bis 0,5 Gew.-%,
bezogen auf das Gesamtgewicht der zu desinfizierenden Flüssigkeit und/oder der Flüssigkeit eines Flüssigkeiten führenden Systems.

Das erfindungsgemäße Desinfektionsmittel wird den zu desinfizierenden Flüssigkeiten zugesetzt und beispielsweise durch Verwirbelung darin verteilt. Falls das erfindungsgemäße Desinfektionsmittel Flüssigkeiten führenden Systemen zugesetzt wird, können die in Flüssigkeiten führenden Systemen durch das Fließen der Flüssigkeiten auftretenden Turbulenzen ausreichen, um das Desinfektionsmittel homogen zu verteilen.

Bei einer Ausführungsform des erfindungsgemäßen Verfahrens wird in Schritt a) der zu behandelnden Flüssigkeit oder der Flüssigkeit in dem zu behandelnden Flüssigkeiten führenden System das erfindungsgemäße Desinfektionsmittels in folgenden Konzentrationen der Komponenten des Desinfektionsmittels, bezogen auf das Gesamtgewicht der Flüssigkeit, für einen Zeitraum von vorzugsweise bis zu einer Stunde, weiter bevorzugt von bis zu einem Tag oder dauerhaft zugesetzt:
mindestens eine Peroxidverbindung in einer Endkonzentration von 0,000001- 5 Gew.-%, vorzugsweise 0,0001 bis 2 Gew.-%, und/oder
mindestens eine oberflächenaktive Substanz in einer Endkonzentration von 0,00001 bis 0,3 Gew.-%, vorzugsweise 0,0001 bis 0,1 Gew.-%, und/oder
mindestens einem Lebensmittelkonservierungsstoff in einer Endkonzentration von 0,00001 bis 3 Gew.-%, vorzugsweise 0,0003 bis 1 Gew.-%, und/oder
mindestens einen Stoff, der den Energiestoffwechsel hemmt oder verändert, in einer Endkonzentration von 0,00001 bis 4 Gew.-%, vorzugsweise 0,0001 bis 2 Gew.-%,
bezogen auf das Gesamtgewicht der zu desinfizierenden Flüssigkeit oder der Flüssigkeit eines zu desinfizierenden Systems.

In einem weiteren Schritt b) kann das erfindungsgemäße Desinfektionsmittel der zu behandelnden Flüssigkeit oder dem Flüssigkeiten führenden System einmal oder wiederholt in Intervallen oder kontinuierlich zugesetzt werden. Die Konzentrationen der einzelnen Komponenten in dem erfindungsgemäßen Desinfektionsmittels betragen vorzugsweise
mindestens eine Peroxidverbindung in einer Endkonzentration von 0,0000000025 - 1 Gew.-%, vorzugsweise 0,00000025 bis 0,5 Gew.- %, und/oder
mindestens eine oberflächenaktive Substanz in einer Endkonzentration von 0,0000000025 bis 0,05 Gew.-%, vorzugsweise 0,00000025 bis 0,03 Gew.-%, und/oder
mindestens einem Lebensmittelkonservierungsstoff in einer Endkonzentration von 0,000000025 bis 0,5 Gew.-%, vorzugsweise 0,00000075 bis 0,3 Gew.-%, und/oder
mindestens einen Stoff, der den Energiestoffwechsel hemmt oder verändert, in einer Endkonzentration von 0,000000025 bis 0,5 Gew.-%,
bezogen auf das Gesamtgewicht der zu desinfizierenden Flüssigkeit oder der Flüssigkeit eines zu desinfizierenden Systems.

Das Behandlungsintervall in Schritt b) beträgt vorzugsweise 1 Tag bis 3 Jahre, weiter bevorzugt 3 Wochen bis 3 Jahre. Das behandlungsfreie Intervall beträgt vorzugsweise 1 Tag bis 3 Jahre, weiter bevorzugt 1 Monat bis 1 Jahr.

Vorzugsweise liegt der pH-Wert des erfindungsgemäßen Desinfektionsmittels nach der Zugabe zu der zu desinfizierenden Flüssigkeit oder zu der Flüssigkeit in dem zu behandelnden Flüssigkeiten führenden System in einem pH-Wert-Bereich von 2-10, vorzugsweise 4-7, und/oder wird darauf eingestellt.

Die Aufgabe wird ferner durch ein Verfahren zur Desinfektion von Luft gelöst, wobei in die Luft das Desinfektionsmittel in einer Konzentration von 0,001 ml bis 50 ml, vorzugsweise 0,04 ml bis 0,1 ml, Desinfektionslösung/m³ Luft/h in Form eines Aerosols einmalig, wiederholt oder fortdauernd eingebracht wird. Vorzugsweise beträgt die Dauer des Behandlungsintervalls und/oder des behandlungsfreien Intervalls eine Zehntel (¹/₁₀) Sekunde bis zu einem Jahr, weiter bevorzugt 20 min bis zu einem Tag.

Das Aerosols kann durch Sprühen, Verdüsen und/oder Ultraschallkaltvernebelung erzeugt werden. Vorzugsweise weisen die Flüssigkeitstropfen des Aerosols eine Größe in einem Bereich von 20 nm bis 10 µm auf.

Das Aerosol schlägt sich beispielsweise auf den Staubpartikeln in der Luft nieder und desinfiziert diese.

### Figuren:

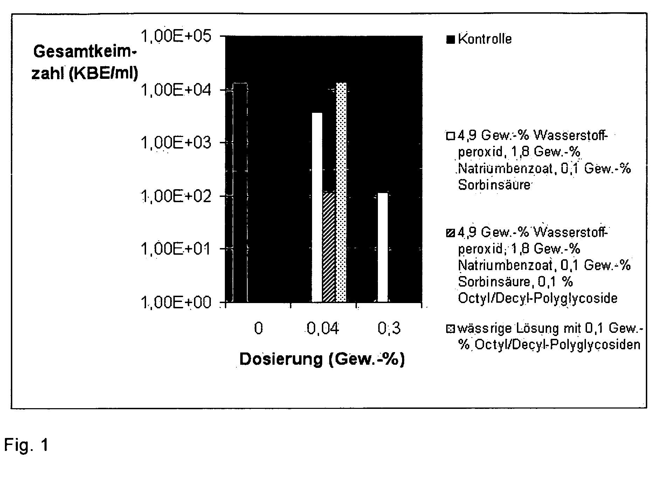

**Figur 1** zeigt ein Diagramm, in dem die Gesamtkeimzahl allgemeiner Umweltkeime in Flusswasser nach einer Stunde Inkubation mit Desinfektionsmittel als dekadischer Logarithmus gegen verschiedene Konzentrationen von Desinfektionsmitteln aufgetragen wurde. Als Desinfektionsmittel wurden Wasserstoffperoxid, Natriumbenzoat und Sorbinsäure in Kombination mit und ohne Octyl/Decyl-Polyglycosiden getestet. Die Kontrolle zeigt das unbehandelte Flusswasser. Die Legende gibt die Konzentrationen der einzelnen Komponenten des Desinfektionsmittels in Gew.-%, bezogen auf das Gesamtgewicht des Desinfektionsmittels, an. Die X-Achse gibt die Verdünnung des Desinfektionsmittels in Gew.-% unter Erhalt der Desinfektionslösung an.

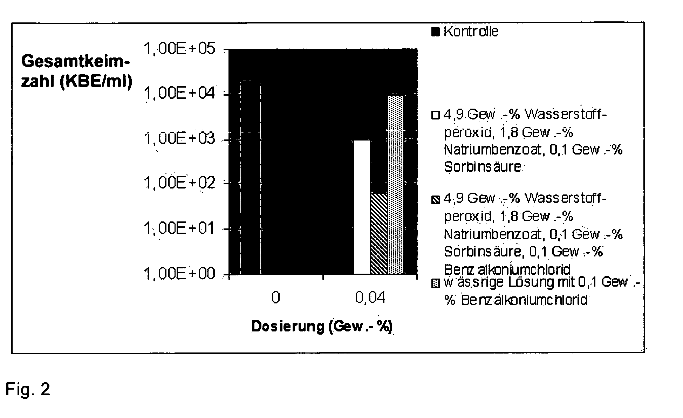

**Figur 2** zeigt ein Diagramm, in dem die Gesamtkeimzahl allgemeiner Umweltkeime in Flusswasser nach einer Stunde Inkubation mit Desinfektionsmittel als dekadischer Logarithmus gegen verschiedene Konzentrationen von Desinfektionsmitteln aufgetragen wurden. Als Desinfektionsmittel wurden Wasserstoffperoxid, Natriumbenzoat und Sorbinsäure in Kombination mit und ohne Benzalkoniumchlorid getestet. Die Kontrolle zeigt das unbehandelte Flusswasser. Die Legende gibt die Konzentrationen der einzelnen Komponenten des Desinfektionsmittels in Gew.-% bezogen auf das Gesamtgewicht des Desinfektionsmittels, an. Die X-Achse gibt die Verdünnung des Desinfektionsmittels in Gew.-% unter Erhalt der Desinfektionslösung an.

Die nachfolgenden Beispiele sollen die vorliegende Erfindung erläutern, aber in keiner Weise beschränken.

### Beispiele

### Beispiel 1

Umweltschonendes Desinfektionsmittel für Brauchwasser/Prozesswasser
4,9 Gew.-% Wasserstoffperoxid
2,5 Gew.-% Natriumbenzoat,
0,2 Gew.-% Sorbinsäure,
0,5 Gew.-% Cetyltrimethylammoniumchlorid,
0,5 Gew.-% Polyoxyethylen (20) Sorbitanoleat.

Anwendungsendkonzentration des Desinfektionsmittel: 0,00025 bis 1 Gew.-%, bezogen auf das Gewicht des Brauchwasser/Prozesswasser.

### Beispiel 2

4,9 Gew.-% Wasserstoffperoxid
2,5 Gew.-% Natriumbenzoat,
0,2 Gew.-% Sorbinsäure,
0,3 Gew.-% Benzalkoniumchlorid,
0,2 Gew.-% 2-(2-Butoxyethoxy)ethanol

Anwendungsendkonzentration des Desinfektionsmittel: 0,00025 bis 1 Gew.-%, bezogen auf das Brauchwasser/Prozesswasser.

### Beispiel 3

Antimikrobiell wirksames Aerosol zur Ultraschallkaltvernebelung in lebensmittelverarbeitenden Betrieben:
Wasserstoffperoxid 1,5 Gew.-%
Natriumbenzoat 0,35 Gew.-%
Sorbinsäure 0,025 Gew.-%
Octyl/Decyl-Polyglycoside 0,01 Gew.-%.

Anwendungsendkonzentration: 0,04 bis 5 ml pro m³ Raumvolumen pro Stunde

### Beispiel 4

Desinfektion von Flusswasser:
Zu 250 ml Flusswasser wurden 0,3 Gew.-%,1 Gew.-% oder 3 Gew.- % Desinfektionsmittel, bezogen auf das Gewicht des Flusswassers, zugesetzt. Die Einwirkzeit betrug 1 Stunde bei 22 °C. Anschließend wurden 50 µl behandeltes Flusswasser auf Caso-Agar mit Bengalrot gleichmäßig verteilt, 48 Stunden bei 30 °C inkubiert und die Zahl der - überwiegend rot eingefärbten - Kolonien bestimmt.

Die nachfolgende Tabelle 1 gibt die Gesamtkeimzahl (KBE = Kolonien bildende Einheiten pro ml) an.

**Tabelle 1**

| **Gew.-% der Desinfektionsmittelkombination in Flusswasser** | **0** | **0,3** | **1** | **3** |
|---|---|---|---|---|
| 4,9 Gew.-% H₂O₂ | 10³ bis 10⁴ | 10³ | 10³ | 0 |
| 1,8 Gew.-% Natriumbenzoat | | | | |
| 0,1 Gew.-% Sorbinsäure | | | | |
| 4,9 Gew.-% H₂O₂ | | 10² | 0 | 0 |
| 1,8 Gew.-% Natriumbenzoat | | | | |
| 0,1 Gew.-% Sorbinsäure | | | | |
| 1 Gew.-% Octyl/Decylpolyglycoside | | | | |
| 4,9 Gew.-% H₂O₂ | | 0 | 0 | 0 |
| 1,8 Gew.-% Natriumbenzoat | | | | |
| 0,1 Gew.-% Sorbinsäure | | | | |
| 1 Gew.-% Cetyltrimethylammoniumhydroxid | | | | |

**Tabelle 2** gibt zur besseren Übersicht die Endkonzentrationen der einzelnen Komponenten der erfindungsgemäßen Desinfektionslösung in der behandelten Flüssigkeit für eine zugegeben Menge von 0,3 Gew.-% , 1 Gew.-% und 3 Gew.-% Desinfektionsmittel an:

**Tabelle 2:**

| Endkonzentrationen der einzelnen Komponenten der erfindungsgemäßen Desinfektionslösung in Gew.-% | | | |
|---|---|---|---|
| **Gew.-% der Desinfektionsmittelkombination in Flusswasser** | **0,3 Gew.-%** | **1 Gew.-%** | **3 Gew.-%** |
| H₂O₂ | 0,0147 | 0,049 | 0,147 |
| Natriumbenzoat | 5,4 x 10⁻³ | 0,018 | 5,4 x 10⁻² |
| Sorbinsäure | 3 x 10⁻⁴ | 0,001 | 3 x 10⁻³ |
| Octyl/Decylpolyglycosid | 3 x 10⁻³ | 0,01 | 3 x 10⁻² |
| Cetyltrimethylammoniumhydroxid | 3 x 10⁻³ | 0,01 | 3 x 10⁻² |

### Beispiel 5

Versuche mit niedrigeren Konzentrationen der oberflächenaktiven Substanz zum Nachweis eines synergistischen Effektes durch Zugabe von Octyl/Decylglycosiden oder Benzalkoniumchlorid.

Durchführung siehe Beispiel 4 mit verschiedenen Konzentrationen des Desinfektionsmittels bzw. verschiedenen Desinfektionsmitteln wie in Figur 1 und 2 angegeben. Das Desinfektionsmittel wurde in einer Konzentration von 0,3 oder 0,04 Gew.-%, bezogen auf das Gesamtgewicht der Flüssigkeit, zugesetzt.

Tabelle 3 gibt zur besseren Übersicht die Endkonzentrationen der einzelnen Komponenten der erfindungsgemäßen Desinfektionslösung in der behandelten Flüssigkeit für eine zugegeben Menge von 0,3 Gew.-% und 0,04 Gew.-% Desinfektionsmittel an:

**Tabelle 3:**

| Endkonzentrationen der einzelnen Komponenten der erfindungsgemäßen Desinfektionslösung in Gew.-% | | |
|---|---|---|
| **Gew.-% der Desinfektionsmittelkombination in Flusswasser** | **0,04 Gew.-%** | **0,3 Gew.-%** |
| H₂O₂ | 1,96 x 10⁻³ | 0,0147 |
| Natriumbenzoat | 7,2 x 10⁻⁴ | 5,4 x 10⁻³ |
| Sorbinsäure | 4 x 10⁻⁵ | 3 x 10⁻⁴ |
| ggf. Octyl/Decylpolyglycosid | 4 x 10⁻⁴ | 3 x 10⁻³ |
| ggf. Benzalkoniumchlorid | 4 x 10⁻⁵ | |

Figur 1 und 2 zeigen die Gesamtkeimzahl (KBE pro ml) als dekadischer Logarithmus in Abhängigkeit von der Dosierung (Gew.-%). Dargestellt ist jeweils der Mittelwert aus Doppelbestimmungen.

Durch die Kombination von Wasserstoffperoxid, Natriumbenzoat, Sorbinsäure mit Octyl/Decyl-Polyglycosiden konnte die Wirksamkeit des Desinfektionsmittels um mehr als den Faktor 10 bei einer Dosierung von 0,04 Gew.-% verbessert werden (Figur 1). Ohne Zugabe von Octyl/Decyl-Polyglycosiden konnte nur bei einer Dosierung von 0,3 Gew.-% Desinfektionsmittel , d.h. bei einer fast 10-fach höheren Dosierung, eine vergleichbare Keimreduzierung erreicht werden.

Im Vergleich mit der Wasserstoffperoxidlösung allein in Kombination mit Natriumbenzoat und Sorbinsäure konnte durch Zugabe von 0,1 Gew.-% Benzalkoniumchlorid die Gesamtkeimzahl um mehr als den Faktor 10 verringert werden (Figur 2).

Die Figuren 1 und 2 zeigen, dass durch die Zugabe geringer Konzentrationen einer oberflächenaktive Substanz die Wirksamkeit einer Wasserstoffperoxidlösung kombiniert mit Natriumbenzoat und Sorbinsäure deutlich, in synergistischer Weise, verbessert werden kann.

## Patentansprüche

1. Desinfektionsmittel umfassend:
a) mindestens eine Peroxidverbindung,
b) mindestens eine oberflächenaktive Substanz, ausgewählt aus der Gruppe, umfassend Zuckertenside, quaternäre Ammoniumverbindungen, Alkalisalze von Fettsäuren, Aminosäurederivate mit Tensidwirkung, Glycolether, Derivate davon und/oder Mischungen davon und
c) mindestens einen Lebensmittelkonservierungsstoff und/oder ein Derivat davon, vorzugsweise ausgewählt aus der Gruppe, umfassend Sorbinsäure, Essigsäure, Propionsäure, Ascorbinsäure, Ameisensäure, Milchsäure, Brenztraubensäure, Weinsäure, Äpfelsäure, Benzoesäure, Benzylbenzoesäure, Salicylsäure, Zitronensäure, Methoxy-Benzoesäure, Hydroxybenzoesäure, Methyl-Parahydroxybenzoesäure, Propyl-Parahydroxybenzoesäure, Salze davon, Derivate davon und/oder Mischungen davon,
wobei vorzugsweise die Konzentration der oberflächenaktiven Substanz weniger als 0,5 Gew.-%, bezogen auf das Gesamtgewicht des Desinfektionsmittels, beträgt.

2. Desinfektionsmittel nach Anspruch 1, wobei die Peroxidverbindung aus der Gruppe, umfassend Alkaliperoxide, Erdalkaliperoxide, Wasserstoffperoxid, Peroxysäure, Perborate, Perphosphate, Percarbonate und/oder Mischungen davon, ausgewählt ist.

3. Desinfektionsmittel nach einem der vorhergehenden Ansprüche, wobei die Peroxidverbindung in einer Konzentration von 0,001 bis 10 Gew.-%, bezogen auf das Gesamtgewicht des Desinfektionsmittels, enthalten ist.

4. Desinfektionsmittel nach einem der vorhergehenden Ansprüche, wobei die oberflächenaktive Substanz in einem Konzentrationsbereich von mindestens 0,001 und weniger als 0,5 Gew.-%, bezogen auf das Gesamtgewicht des Desinfektionsmittels, enthalten ist.

5. Desinfektionsmittel nach einem der vorhergehenden Ansprüche, wobei der Lebensmittelkonservierungsstoff in einer Konzentration von 0,01 bis 5 Gew.-%, bezogen auf das Gesamtgewicht des Desinfektionsmittels, enthalten ist.

6. Desinfektionsmittel nach einem der vorhergehenden Ansprüche,
wobei das Desinfektionsmittel ferner mindestens einen Stoff umfasst, der den Energiestoffwechsel von Mikroorganismen hemmt oder verändert.

7. Desinfektionsmittel nach einem der vorhergehenden Ansprüche,
wobei das Desinfektionsmittel ferner mindestens einen Zuckeraustauschstoff umfasst.

8. Desinfektionsmittel nach Anspruch 7, wobei der Zuckeraustauschstoff aus der Gruppe, umfassend Mannit, Sorbit, Maltit, Isomalt, Lactit, Leucrose, Fructooligosaccharide, Glucane, Polyglucose PL-3, L-Ketose, Nystose, Fructyl-Nystose und/oder Xylit, ausgewählt ist.

9. Desinfektionsmittel nach einem der vorhergehenden Ansprüche 6 bis 8, wobei der Stoff, der den Energiestoffwechsel hemmt oder verändert, in einer Konzentration von 0,001 bis 5 Gew.-%, bezogen auf das Gesamtgewicht des Desinfektionsmittels, enthalten ist.

10. Desinfektionslösung, umfassend das Desinfektionsmittel nach einem der vorhergehenden Ansprüche 1 bis 9 und/oder eine zu desinfizierende Flüssigkeit oder eine Flüssigkeit eines Flüssigkeiten führenden Systems, wobei die Desinfektionslösung
mindestens eine Peroxidverbindung in einer Endkonzentration von 0,000001- 5 Gew.-%, und/oder
mindestens eine oberflächenaktive Substanz in einer Endkonzentration von 0,00001 bis 0,3 Gew.-%, und/oder mindestens einem Lebensmittelkonservierungsstoff in einer Endkonzentration von 0,00001 bis 3 Gew.-%, und/oder
mindestens einen Stoff, der den Energiestoffwechsel hemmt oder verändert, in einer Endkonzentration von 0,00001 bis 4 Gew.-%,
bezogen auf das Gesamtgewicht der zu desinfizierenden Flüssigkeit und/oder der Flüssigkeit des Flüssigkeiten führenden Systems,
umfasst.

11. Desinfektionslösung, umfassend das Desinfektionsmittel nach einem der vorhergehenden Ansprüche 1 bis 9 und eine zu desinfizierende Flüssigkeit und/oder eine Flüssigkeit eines Flüssigkeiten führenden Systems, wobei die Desinfektionslösung
mindestens eine Peroxidverbindung in einer Endkonzentration von 0,0000000025 - 1 Gew.-%, und/oder
mindestens eine oberflächenaktive Substanz in einer Endkonzentration von 0,0000000025 bis 0,05 Gew.-%, und/oder
mindestens einem Lebensmittelkonservierungsstoff in einer Endkonzentration von 0,000000025 bis 0,5 Gew.-%, und/oder
mindestens einen Stoff, der den Energiestoffwechsel hemmt oder verändert, in einer Endkonzentration von 0,0000000025 bis 0,5 Gew.-%,
bezogen auf das Gesamtgewicht der zu desinfizierenden Flüssigkeit und/oder der Flüssigkeit des Flüssigkeiten führenden Systems,
umfasst.

12. Verwendung des Desinfektionsmittels nach einem der Ansprüche 1 bis 9 zur Keimzahlverringerung in Flüssigkeiten, Emulsionen, Suspensionen, in Flüssigkeiten führenden Systemen und/oder Luft, insbesondere in oder bei Produktionsanlagen für Produkte mit Hygieneanspruch.

13. Verwendung nach Anspruch 12, wobei in Wasser, insbesondere Trinkwasser, Kühlwasser und/oder Brauchwasser die Keimzahlverringerung durchgeführt wird.

14. Verwendung des Desinfektionsmittels nach einem der Ansprüche 1 bis 9 zur Beseitigung und/oder Verringerung von Biofilmen und/oder der Keimzahl in Flüssigkeiten, Flüssigkeiten führenden Systemen und/oder der Luft in der Lebensmittelherstellung, bei der Verpackung von Lebensmitteln, der Lebensmittellagerung, dem Lebensmittelverkauf, der Herstellung von Arzneimitteln, bei biotechnologischen Verfahren, in privaten Haushalten, gewerblichen Räumen, Sporteinrichtungen, in Schwimmbädern, in medizinischen Bereichen, Trinkwasseranlagen, Prozesswasser von Industrieanlagen, Wasch- und Spülanlagen in Großwäschereien, Autowaschanlagen, Druckereien, Brunnen und Teichen, Wasser in Biotopen, in der Fischzucht, in Aqua-Kulturen, Wasser von sanitären Anlagen, Löschwasser, zur Wasserdesinfektion im Katastrophenschutz, der Desinfektion von Wasser in Klimaanlagen, in Warm-Kaltwassersystemen, Kühlsystemen, Beregnungsanlagen, Wärmeaustauschern, Kompressoren, Kühltürmen, Lüftwäschern, bei der Glasherstellung, Porzellanherstellung, im Feuchtwasser in Druckereien, in Lösungen und wässrigen Lösungen bei der Papierherstellung, als Zusatz zu Trennmitteln in Gussformen, in Molkereien, der Abfallwirtschaft und/oder beim Bautenschutz.

15. Verfahren zur Desinfektion von Flüssigkeiten und/oder Flüssigkeiten führenden Systemen, wobei das Desinfektionsmittel mit den Flüssigkeiten und/oder den Flüssigkeiten eines Flüssigkeiten führenden Systems zu der vorstehend gemäß Anspruch 10 und 11 definierten Desinfektionslösung verdünnt wird.

16. Verfahren zur Desinfektion von Flüssigkeiten oder Flüssigkeiten führenden Systemen, umfassend einen Schritt a) und ggf. einen Schritt b), wobei
in Schritt a) eine Desinfektionslösung, wie in Anspruch 10 definiert, für einen Zeitraum von vorzugsweise bis zu einer Stunde, weiter bevorzugt von bis zu einem Tag oder dauerhaft zur Desinfektion eingesetzt wird und wobei
in einem weiteren Schritt b) eine Desinfektionslösung, wie in Anspruch 11 definiert, einmalig, wiederholt mit einem Intervall von bevorzugt einem Tag bis zu drei Jahren oder kontinuierlich zur Desinfektion eingesetzt wird.

17. Verfahren zur Desinfektion von Luft, wobei in die Luft das Desinfektionsmittel nach einem der Ansprüche 1 bis 9 in einer Konzentration von 0,001 bis 50 ml Desinfektionsmittel/m³ Luft /h in Form eines Aerosols kontinuierlich, in Intervallen oder in Form einzelner oder wiederholter Sprühstöße eingebracht wird.

18. Verfahren nach Anspruch 17, wobei das Aerosol Flüssigkeitströpfchen mit einer Größe in einem Bereich von 20 nm bis 10 µm aufweist.

19. Verfahren nach Anspruch 17 oder 18, wobei das Aerosol durch Sprühen, Verdüsen, Ultraschall-Kaltvernebelung und/oder durch andere Kaltnebelgeräte hergestellt wird.

## Geänderte Patentansprüche

### Geänderte Patentansprüche gemäss Regel 137(2) EPÜ.

**1.** Verwendung eines Desinfektionsmittels
zur Beseitigung und/oder Verringerung von Biofilmen und/oder der Keimzahl
in Flüssigkeiten und/oder Flüssigkeiten führenden Systemen von Druckereien und/oder in Lösungen bei der Papierherstellung, wobei das
Desinfektionsmittel umfasst:
a) mindestens eine Peroxidverbindung,
b) mindestens eine oberflächenaktive Substanz, ausgewählt aus der Gruppe, umfassend Zuckertenside, quaternäre Ammoniumverbindungen, Alkalisalze von Fettsäuren, Aminosäurederivate mit Tensidwirkung, Glycolether, Derivate davon und/oder Mischungen davon und
c) mindestens einen Lebensmittelkonservierungsstoff und/oder ein Derivat davon, vorzugsweise ausgewählt aus der Gruppe, umfassend Sorbinsäure, Essigsäure, Propionsäure, Ascorbinsäure, Ameisensäure, Milchsäure, Brenztraubensäure, Weinsäure, Äpfelsäure, Benzoesäure, Benzylbenzoesäure, Salicylsäure, Zitronensäure, Methoxy-Benzoesäure, Hydroxybenzoesäure, Methyl-Parahydroxybenzoesäure, Propyl-Parahydroxybenzoesäure, Salze davon, Derivate davon und/oder Mischungen davon,
wobei vorzugsweise die Konzentration der oberflächenaktiven Substanz weniger als 0,5 Gew.-%, bezogen auf das Gesamtgewicht des Desinfektionsmittels, beträgt.

**2.** Verwendung eines Desinfektionsmittels nach Anspruch 1, wobei die Peroxidverbindung aus der Gruppe, umfassend Alkaliperoxide, Erdalkaliperoxide, Wasserstoffperoxid, Peroxysäure, Perborate, Perphosphate, Percarbonate und/oder Mischungen davon, ausgewählt ist-.

**3.** Verwendung eines Desinfektionsmittels nach einem der vorhergehenden Ansprüche, wobei die Peroxidverbindung in einer Konzentration von 0,001 bis 10 Gew.-%, bezogen auf das Gesamtgewicht des Desinfektionsmittels, enthalten ist.

**4.** Verwendung eines Desinfektionsmittels nach einem der vorhergehenden Ansprüche, wobei die oberflächenaktive Substanz in einem Konzentrationsbereich von mindestens 0,001 und weniger als 0,5 Gew.-%, bezogen auf das Gesamtgewicht des Desinfektionsmittels, enthalten ist.

**5.** Verwendung eines Desinfektionsmittels nach einem der vorhergehenden Ansprüche, wobei der Lebensmittelkonservierungsstoff in einer Konzentration von 0,01 bis 5 Gew.-%, bezogen auf das Gesamtgewicht des Desinfektionsmittels, enthalten ist.

**6.** Verwendung eines Desinfektionsmittels nach einem der vorhergehenden Ansprüche,
wobei das Desinfektionsmittel ferner mindestens einen Stoff umfasst, der den Energiestoffwechsel von Mikroorganismen hemmt oder verändert.

**7.** Verwendung eines Desinfektionsmittels nach einem der vorhergehenden Ansprüche,
wobei das Desinfektionsmittel ferner mindestens einen Zuckeraustauschstoff umfasst.

**8.** Verwendung eines Desinfektionsmittels nach Anspruch 7, wobei der Zuckeraustauschstoff aus der Gruppe, umfassend Mannit, Sorbit, Maltit, Isomalt, Lactit, Leucrose, Fructooligosaccharide, Glucane, Polyglucose PL-3, L-Ketose, Nystose, Fructyl-Nystose und/oder Xylit, ausgewählt ist.

**9.** Verwendung eines Desinfektionsmittels nach einem der vorhergehenden Ansprüche 6 bis 8, wobei der Stoff, der den Energiestoffwechsel hemmt oder verändert, in einer Konzentration von 0,001 bis 5 Gew.-%, bezogen auf das Gesamtgewicht des Desinfektionsmittels, enthalten ist.

**10.** Verwendung einer Desinfektionslösung zur Beseitigung und/oder Verringerung von Biofilmen und/oder der Keimzahl in Flüssigkeiten und/oder Flüssigkeiten führenden Systemen von Druckereien und/oder
in Lösungen bei der Papierherstellung umfassend das in einem der Ansprüche 1 bis 9 definierte Desinfektionsmittel und/oder eine zu desinfizierende Flüssigkeit oder eine Flüssigkeit eines Flüssigkeiten führenden Systems, wobei die Desinfektionslösung
mindestens eine Peroxidverbindung in einer Endkonzentration von 0,000001- 5 Gew.-%, und/oder
mindestens eine oberflächenaktive Substanz in einer Endkonzentration von 0,00001 bis 0,3 Gew.-%, und/oder
mindestens einem Lebensmittelkonservierungsstoff in einer Endkonzentration von 0,00001 bis 3 Gew.-%, und/oder
mindestens einen Stoff, der den Energiestoffwechsel hemmt oder verändert, in einer Endkonzentration von 0,00001 bis 4 Gew.-%,
bezogen auf das Gesamtgewicht der zu desinfizierenden Flüssigkeit und/oder der Flüssigkeit des Flüssigkeiten führenden Systems, umfasst.

**11.** Verwendung einer Desinfektionslösung nach Anspruch 10, umfassend das in einem der vorhergehenden Ansprüche 1 bis 9 definierte Desinfektionsmittel und eine zu desinfizierende Flüssigkeit und/oder eine Flüssigkeit eines Flüssigkeiten führenden Systems, wobei die Desinfektionslösung
mindestens eine Peroxidverbindung in einer Endkonzentration von 0,0000000025 - 1 Gew.-%, und/oder
mindestens eine oberflächenaktive Substanz in einer Endkonzentration von 0,0000000025 bis 0,05 Gew.-%, und/oder
mindestens einem Lebensmittelkonservierungsstoff in einer Endkonzentration von 0,000000025 bis 0,5 Gew.-%, und/oder
mindestens einen Stoff, der den Energiestoffwechsel hemmt oder verändert, in einer Endkonzentration von 0,0000000025 bis 0,5 Gew.-%,
bezogen auf das Gesamtgewicht der zu desinfizierenden Flüssigkeit und/oder der Flüssigkeit des Flüssigkeiten führenden Systems, umfasst.

**12.** Verwendung des Desinfektionsmittels nach einem der Ansprüche 1 bis 9 oder der Desinfektionslösung nach einem der Ansprüche 10 und 11 im Feuchtwasser in Druckereien.

**13.** Verfahren zur Beseitigung und/oder Verringerung von Biofilmen und/oder der Keimzahl in Flüssigkeiten und/oder Flüssigkeiten führenden Systemen von Druckereien und/oder in Lösungen bei der Papierherstellung, wobei ein Desinfektionsmittel, wie in einem der Ansprüche 1 bis 9 definiert, mit den Flüssigkeiten und/oder den Flüssigkeiten eines Flüssigkeiten führenden Systems zu der vorstehend gemäß Anspruch 10 und 11 definierten Desinfektionslösung verdünnt wird.

**14.** Verfahren zur Desinfektion zur Beseitigung und/oder Verringerung von Biofilmen und/oder der Keimzahl in Flüssigkeiten und/oder Flüssigkeiten führenden Systemen von Druckereien und/oder in Lösungen bei der Papierherstellung, umfassend einen Schritt a) und ggf. einen Schritt b), wobei
in Schritt a) eine Desinfektionslösung, wie in Anspruch 10 definiert, für einen Zeitraum von vorzugsweise bis zu einer Stunde, weiter bevorzugt von bis zu einem Tag oder dauerhaft zur Desinfektion eingesetzt wird und wobei
in einem weiteren Schritt b) eine Desinfektionslösung, wie in Anspruch 11 definiert, einmalig, wiederholt mit einem Intervall von bevorzugt einem Tag bis zu drei Jahren oder kontinuierlich zur Desinfektion eingesetzt wird.
